# EUROPEAN PATENT APPLICATION

(11) **EP 2 302 370 A1**
(43) Date of publication of application: **30.03.2011**
(21) Application number: 09793983.9
(22) Date of filing: 08.07.2009
(51) Int. Cl.: G01N 27/00

(54) **ELECTRICAL AND REUSABLE DEVICE FOR READING MICROARRAYS**

(30) Priority: 11.07.2008 ES 200802068
(71) Applicant: Consejo Superior de Investigaciones Cientificas (CSIC), 28006 Madrid (ES)
(72) Inventor: BALDI COLL, Antonio, E-08193 Bellaterra (Barcelona) (ES); FERNÁNDEZ SÁNCHEZ, César, E-08193 Bellaterra (Barcelona) (ES); DE LA RICA QUESADA, Roberto, E-08193 Bellaterra (Barcelona) (ES); BONILLA AGUILAR, Diana Lissette, E-08193 Bellaterra (Barcelona) (ES)
(74) Representative: Pons Ariño, Angel
(86) International application number: PCT/ES2009/070278
(87) International publication number: WO 2010/004075

(57) **Abstract**

The invention relates to a device for electrically reading microarrays which can be cleaned and used more than once. The device (1, 1', 1") for reading microarrays (6) comprises the following elements: a base (2, 2', 2") comprising support means (3, 3', 3") for positioning the test surface (7) of the microarray (6) parallel to a reading surface (4) of the base (2, 2', 2"); a matrix of transducers (5, 5', 5") disposed on the reading surface (4) of the base (2, 2', 2"), transforming a variation of an electrical or chemical value into a variation of an electrical value; and reading means (10) which are connected to the transducers (5, 5', 5") and interpret the electrical signals from the transducers (5, 5', 5").

## Description

### OBJECT OF THE INVENTION

The main object of the present invention is a device for electrically reading microarrays which can be cleaned and reused more than once.

### BACKGROUND OF THE INVENTION

Since their appearance at the end of the eighties, biochips or microarrays have enabled quantitative interpretations of many important biological phenomena. A microarray is a set of small-sized spots or test points (from a few nm to a few mm) on a flat plane which allows many tests to be conducted simultaneously, greatly increasing the speed and capacity of analysis with respect to serial analysis systems.

These elements are designed to analyse protein content, protein-protein interactions, protein-DNA interactions, protein-ligand interactions, the presence of DNA mutations, gene expression patterns, etc., of complex biological samples. Microarrays that use antibodies as recognition elements are based on different types of tests:
- Sandwich type, when the analyte is captured by an antibody immobilised on the support and quantified by means of a second marked antibody.
- Competitive type, when copies of the analyte are immobilised on support surface spots and the quantification of said analyte is carried out indirectly based on the marked antibodies, which are joined to said spots in the presence of the sample being analysed.
- Reverse phase type, when the sample is directly adsorbed on the surface of the support and the analyte is recognised by marked antibodies.

In all of the foregoing, quantification is carried out through the detection of a mark which is joined to an antibody. In the case of DNA chips, the mark is joined to the DNA or RNA fragments being analysed. The marks can be optical (fluorescent molecule, quantum point, enzyme whose product precipitates), radioactive (radioisotopes) or electrochemical (enzyme whose product is electroactive or electroactive nanoparticles). This last type of mark has the advantage of allowing the use of purely electrical and therefore more compact, robust and cheaper reading instruments than the more widely used fluorescent marks. There are products in the market that use this type of reading, such as for example the COMBIMATRIX Electrasense reader (WO 2008051196). The company Nanoident Technologies also markets compact systems for electrically reading microarrays based on a matrix of organic photodiodes printed on the same support where the test is carried out (W02006026796).

However, in order to extend the use of microarrays to those places where it is required (next to a patient's bed in a hospital or primary care centre), the equipment must improve in terms of cost, robustness, simplicity and size. This analytical equipment is basically composed of two differentiated parts: the microarrays whereon the test is conducted and the device with which the result of said test is read. In some cases, other complements are also used in the system, such as a robotic arm for depositing recognition components or samples on the spots or measuring points of the microarray (spotter) or elements with fluid and reactive components in order to conduct the test automatically.

Electrical reading devices are more robust, simple and smaller. However, they have the drawback of requiring a device matrix (electrodes or photodiodes) formed on the support itself, which requires using a new support and discarding the used support each time the test is conducted. Additionally, the support is a complex and expensive element, as it must include electrical transducers, etc., rather than the supports normally used in optical systems, which simply consist of a functionalised piece of glass or plastic.

### DESCRIPTION OF THE INVENTION

The present invention describes an electrical and reusable microarray reading device based on the electrochemical measurement (amperometric, potentiometric or impedimetric) of the accumulation of products of an enzymatic reaction when a surface marked by enzymatic marks and a chemical substrate come into contact. The novelty of this device resides in the fact that the transducers in charge of performing the measurement are located in a base different to the microarray support, in such a manner that the reading device can be reused for carrying out as many analyses as desired. Additionally, the reading device can operate with the low-cost supports used by known optical systems. The only requirement for using this reading device is that the enzymatic mark used, on reacting with its corresponding chemical substrate, generates a product that can be detected by the transducers, i.e. a product that will modify an electrical or chemical property of the medium wherein the reaction takes place. Therefore, the transducers of the invention transform electrical or chemical magnitudes of a medium into electrical magnitudes.

In the case of impedimetric transducers, the chemical substrate must be a chemical species with a net charge different to that of the sum of the net charges of the products, in such a manner that the concentration of charged species changes when the enzymatic reaction occurs and therefore the conductivity of the medium. An example of this is the urease enzyme which, on reacting with urea (neutral species), produces ammonia and carbon dioxide. The ammonia quickly becomes protonised, giving rise to the ammonium ion (positively charged), while the carbon dioxide is partially converted into bicarbonate (negatively charged).

In the case of amperometric transducers, the enzymatic reaction must produce electroactive species. An example of this is the alkaline phosphatase enzyme, which produces p-aminophenol in the presence of p-aminophenyl phosphate. P-aminophenol becomes oxidised at a potential of less than 200 mV, giving rise to p-quinoneimine. This enzyme/substrate system allows the use of redox cycling, as the p-quinoneimine can in turn be reduced to a potential of less than -200 mV, giving rise once again to p-aminophenol.

In the case of potentiometric transducers, the enzymatic reaction must produce ions which can be detected by the transducer. The most simple case would be an enzyme that produces a change in pH.

In this document, we will refer to the fact that a microarray is formed by a flat support where one of the surfaces, which we will call the "test surface", has a matrix of spots with an enzymatic mark. The flat support can be any of the supports normally used with other types of reading equipment, for example optical equipment, and can be manufactured from materials such as glass or plastic, among others.

Therefore, in accordance with a first aspect of the invention, an electrical and reusable microarray reading device comprising the following elements is described as follows:
1) A base, comprising support means for disposing the test surface of the microarray parallel to the reading surface of the base.
   The support means of the base must be such that the microarray test surface is disposed parallel to the reading surface of the base. Additionally, the distance between the two surfaces must be such as to allow a drop of an aqueous medium to simultaneously touch both, thereby bringing the chemical substrate present in the aqueous medium and the enzymatic mark of the microarray spots into contact, thereby producing a chemical reaction forming products that affect the electrical or chemical properties of the aqueous medium.
2) A matrix of transducers, disposed on the reading surface of the base, which transform a variation in an electrical or chemical magnitude into a variation of an electrical magnitude.

The transducers are fixed to the reading surface of the base, forming a matrix in such a manner that, when the microarray is disposed over the support means, each transducer is disposed in opposition to a spot.

In order to perform the reading, a drop of aqueous medium containing the corresponding chemical substrate must be applied between each transducer and the respective spot disposed in opposition thereto. The drops of aqueous medium can be formed in any manner, provided that they have the same size and do not touch each other. For example, a micropipette or spotter-type equipment could be used, although in a preferred embodiment of the invention the microarray reading device of the invention comprises means for applying drops of aqueous medium.

Preferably, the means for applying drops of aqueous medium is integrated in the microarray reading device itself and comprises a tank of aqueous medium coupled to the surface of the base opposite the reading surface, and a matrix of micro-channels made in the base of the device itself. Each micro-channel connects the tank of aqueous medium to the point where each transducer is located in such a manner that, by modifying the pressure on the tank, a controlled injection of aqueous medium is achieved, thereby forming drops of uniform volume above each transducer. Additionally, the tank of aqueous medium comprises an input and output of aqueous medium, in such a manner that different liquids can be injected therewith.

In another preferred embodiment, the means for applying drops of aqueous medium is an applicator that comprises a tank of aqueous medium and a matrix of micro-channels made in one of its walls. As in the case of the means for applying drops of aqueous medium described in the preceding paragraph, by correctly disposing the applicator on the reading surface of the base and modifying the pressure on the tank, fluid is injected above each transducer until a drop of the desired volume is formed. This can be done by directly forming a single drop or depositing a multitude of droplets expelled from the micro-channel nozzle, using a similar mechanism to that used by ink injection printers, which, on becoming joined above the transducer, form the drop. Due to being an applicator which is not integrated into the base, it must be positioned in such a manner that each micro-channel is disposed in opposition to a transducer. To this end, the same support means used to dispose the microarray can be used. 3) Reading means, connected to the transducers, which interpret the electrical signals of the transducers.

Once the drops come into contact with the enzymatically marked microarray spots, the enzymatic reaction occurs. In those spots with a greater concentration of the enzymatic mark, the transducer will measure a greater change in the concentration of products. The drops are separated from each other and therefore the products accumulate in the volume thereof without interference between the different points of the matrix. Therefore, the matrix of transducers is connected to electronic measuring circuits capable of acquiring and processing the signal generated by each of said transducers. The measurement can be performed after a certain time or while the drops are in contact with the spots. The second case allows us to measure enzymatic reaction dynamics, providing greater analytical information. For example, it can allow a broader dynamic range, as the evolution of product concentrations can be detected before reaching a saturation value.

In accordance with a second aspect of the invention, an electrical process for reading microarrays using the previously described reading device is described, which comprises the following operations:
a) Bring the microarray spots into contact with the drops of aqueous medium, producing a chemical reaction in each drop that modifies an electrical or chemical property of the aqueous medium that forms the drop.
   This operation can be carried out in two different manners. In accordance with a particular embodiment, drops of aqueous medium can firstly be created above the transducers and the microarray subsequently disposed with the help of support means, parallel to the reading surface of the base and at a distance such that each spot is disposed in opposition to a transducer and the drop of aqueous medium touches both.
   In another particular embodiment, it is possible to firstly dispose the microarray on the support means and then inject the aqueous medium above the transducers, until forming drops of a size sufficiently large for each to simultaneously come into contact with the transducer and with the spot disposed in opposition thereto.
b) Read, using reading means, the electrical signal generated by each of the transducers in response to the modification of an electrical or chemical property of the aqueous medium that forms the drop.
   Once the drop of aqueous medium comes into contact with an enzymatically marked spot, the chemical reaction starts between the chemical substrate included in the aqueous medium and the enzymatic mark of the spot, forming, as a result of the reaction, products that modify an electrical or chemical property of the aqueous medium that forms the drop. The next reading operation can be performed either simultaneously above all the transducers of the matrix or sequentially by rows, columns or individually.
c) Clean the reading surface of the device and reuse it for conducting new tests.

It is important that, once the reading has been performed and before performing a new reading, the transducers and the reading surface of the base of the device are cleaned in order to remove all traces of the products of the enzymatic reaction or enzymes that could have become detached from the microarray. In this regard, the cleaning solution(s) must be capable of dissolving the products of the enzymatic reaction and denaturing the enzymes, so that they completely lose their activity. Cleaning can be completed by rinsing in deionised water.

Cleaning can be carried out traditionally or in accordance with a particular embodiment of the invention, suctioning the drops of aqueous medium generated and subsequently injecting a cleaning solution using the means for applying the drops of aqueous medium. In order to carry out this operation of the process, the means for applying drops of aqueous medium must be capable of creating negative pressures on the tank whereto the micro-channels are connected and substituting the aqueous medium of the tank for an adequate cleaning solution.

### DESCRIPTION OF THE DRAWINGS

In order to complement this description and with the object of helping to better understand the characteristics of the invention, according to a preferred example of practical embodiment thereof, a set of drawings has been included as an integral part of said description, wherein the following have been represented in an illustrative and non-limiting manner:
Figure 1 shows a schematic view of a microarray with a flat support, illustrating its different constituent parts.
Figure 2 shows a schematic view of an electrical device for reading microarrays in accordance with the invention.
Figures 3 and 4 show two particular embodiments of means for applying drops of aqueous medium.
Figures 5 and 6 show the first operations of the process for electrically reading microarrays, in accordance with a particular embodiment of the invention.
Figure 7 shows a particular embodiment of the reading means in accordance with the present invention.

### PREFERRED EMBODIMENT OF THE INVENTION

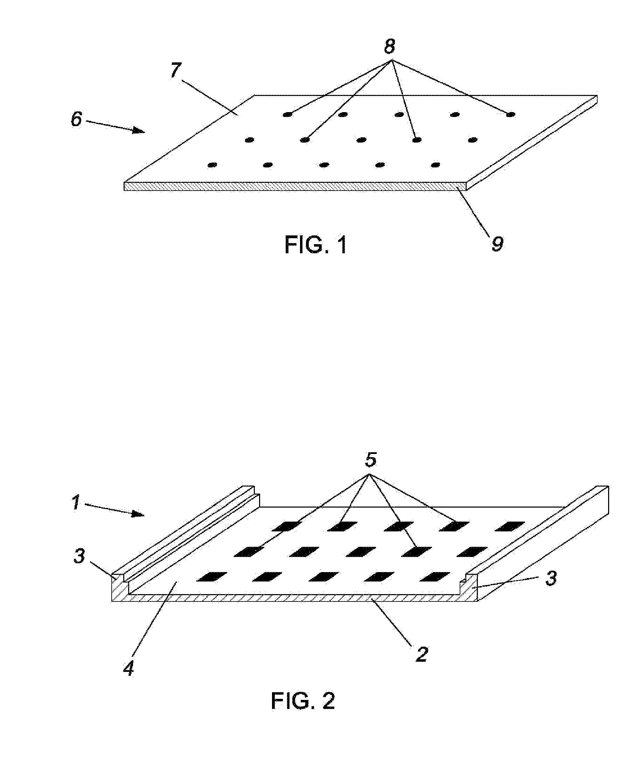

Figure 1 shows a microarray (6) formed by a flat support (9), on the test surface (7) of which a matrix of measuring points or spots (8) are disposed and marked by an enzymatic mark.
Figure 2 shows a schematic view of the device(1) for reading microarrays in accordance with the present invention. We can observe that it is formed by a base (2) on the reading surface (4) of which there is a matrix of transducers (5) that react to a change in an electrical or chemical property of the aqueous medium.

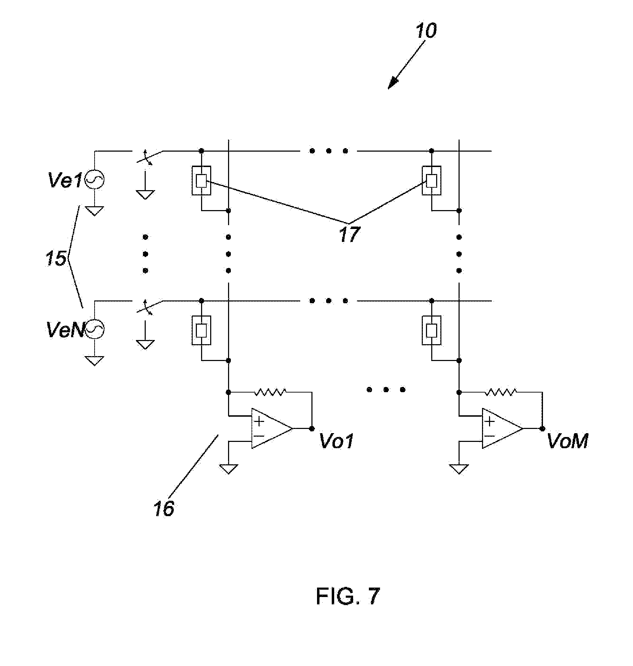

The electrical and reusable device (1) for reading microarrays of the example also comprises, on the sides of the base (2), support means (3) that serve to support the microarray (6), in such a manner that each spot (8) of the matrix is disposed in opposition to a transducer (5). In this example, the support means (3) basically comprise a rim that serves as a support to the microarray (6) during the reading process. Although not observed in the figures, the reading means (10), which have been represented in figure 7, are disposed on the surface opposite the reading surface (4).

The base (2) and the matrix of transducers (5) are manufactured from pyrex-type glass wafers 100 mm in diameter. The process starts with the deposition of a metallic tri-layer of titanium, nickel and gold (the titanium is deposited on the pyrex in a layer 20 nm thick, the nickel on the titanium in a layer 50 nm thick and the gold on the nickel in a layer 50 nm thick). The three metals are deposited by cathode spraying. Next, a standard photolithographic process is carried out with a template containing the patterns for defining a matrix of interdigitated electrode pairs. Each pair of interdigitated electrodes contains fourteen fingers (seven in each electrode) 20 µm wide, separated by a distance of 20 µm therebetween, wherein the interdigitated area is 500 µm long. The same template is used to define the connection tracks that run from each electrode to the edge of the chip, where an area is defined for connection thereof to a printed circuit by means of wire welding. The transducers form a rectangular matrix of 4x9 elements separated by a distance of 6 mm therebetween. Two matrices of transducers (5) such as that described fit in a 100 mm wafer. Metal attack subsequent to photolithography is carried out using different attack solutions. In the case of gold, a mixture of 5,700 ml of H₂O, 435 g of KI and 250 g of I₂ are used. In the case of nickel, a 1:4 mixture of 70% HNO₃:H₂O is used. In the case of titanium, a 1:10:33 mixture of 49% HF:H₂O:1.2-propanediol is used.

Once the electrodes on the wafer have been defined, it is passed through a power saw to separate the two matrices of transducers (5). The matrices are joined to a printed circuit wherein the necessary areas for connection by means of wire welding have been defined and there is a connector for electrically connecting the electrodes to the instruments. After wire welding the electrodes, the wires are protected by means of a thermocurable polymer (Epotek H77). The support means (3) are manufactured from moulded polydimethylsyloxane and welded to the matrix of transducers by means of oxygen plasma activation.

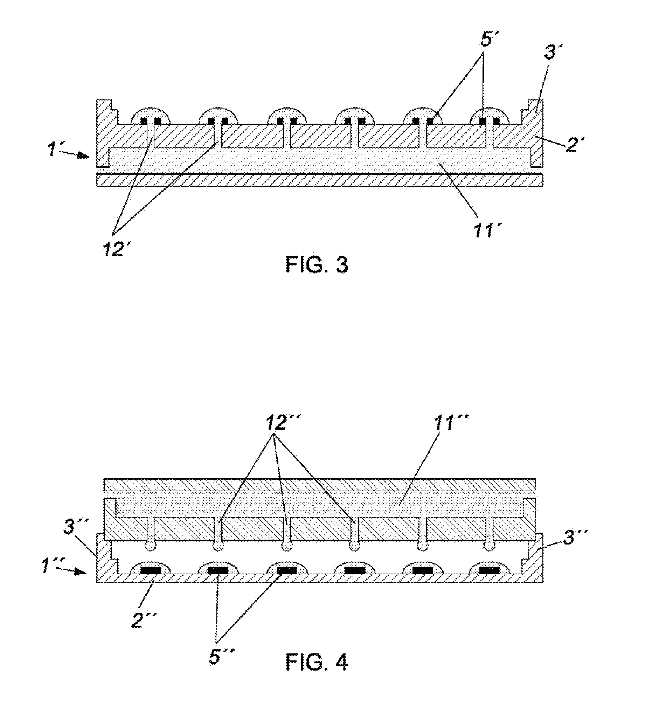

For their part, figures 3 and 4 respectively show two preferred embodiments of means for applying an aqueous medium. In figure 3, they are integrated into the base (2'), in such a manner that a tank of aqueous medium (11') formed on the surface opposite the reading surface (4) injects the aqueous medium through a matrix of micro-channels (12') that cross the base (2') to the place where each transducer (5') is positioned. In this example, the transducers (5') have a central orifice wherein the nozzle of each micro-channel is disposed.

In figure 4, the means for applying the aqueous medium consist of an applicator formed by a tank (11') of aqueous medium on one of the walls of which there are micro-channels (12') wherethrough the aqueous medium is injected over the transducers (5'). In order to dispose each micro-channel in opposition to a transducer (5'), the support means (3") also comprise a second rim whereupon the aqueous medium applicator is disposed.

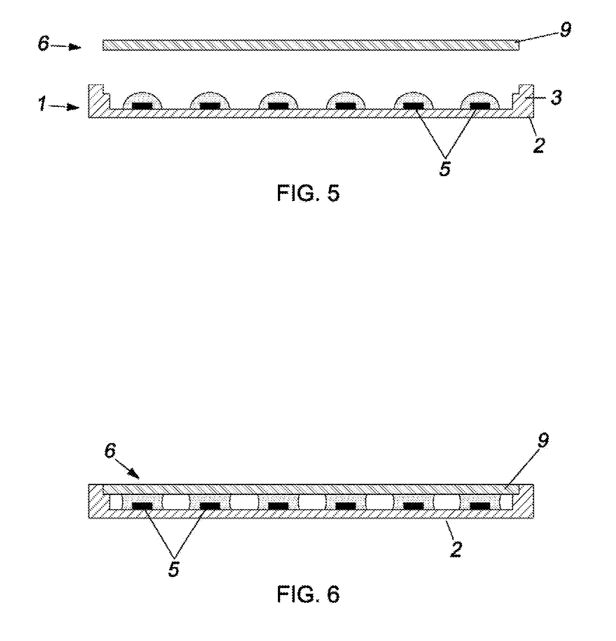

Figures 5 and 6 show several operations of a preferred embodiment of the process of the invention. In particular, figure 5 shows the microarray (6) and the reading device (1), where the operation of injecting a drop of aqueous medium over each transducer (5) has previously been carried out. The microarray (6) is already prepared to be disposed on the support means (3), a moment which is represented in figure 6, wherein each drop of aqueous medium is already in contact with a spot (8) and therefore the chemical reaction between the enzymatic mark and the substrate has started.

Finally, figure 7 shows the measuring instruments in the case that the product of the chemical reaction between the enzymatic mark and the chemical substrate causes changes in the impedance of the aqueous medium of the drop. The instruments comprise sources of excitation of alternating voltage (15) and alternating current measuring circuits (16) which, combined, are capable of measuring the impedance observed in terminals of the interdigitated electrodes (17). In the figure we can observe the connection of said sources (15) and measuring circuits (16) to the electrodes (17). As can be observed, the impedimetric transducers allow row to column type connection. This makes the manufacture of matrices with a large number of elements practical. For example, a matrix composed of 1,024 elements would only require 32 alternating sources of excitation (15) and 32 current measuring circuits (16). In fact, with appropriate multiplexation, a single excitation source (15) and a single current measuring circuit (16) are sufficient. In the case of a very large number of matrix elements, a large number of wire welds would also be required. In order to solve this problem we can use manufacturing technology based on a metallic bi-layer and connect the electrodes (17) at wafer level by rows and columns, as shown in figure 7. In this manner, the number of wire welds required to encapsulate a matrix of transducers of (n x m) is only (n + m). In the example described herein, the excitation sources are the analogue outputs of an NI USB-6259 card manufactured by National Instruments. The current measuring circuits (16) have been implemented in the example with AD8674 operating amplifiers with a precision feedback resistance of 100 kΩ. The operating amplifier output voltage values have been recorded by the analogue inputs of the aforementioned card. A LabView programme controls the acquisition process, processes the acquired signals and obtains the impedance values of the transducers (5) during the reading time. The acquisition process is implemented according to the following sequence: firstly, a row of transducers (5) is excited by applying alternating voltage with an amplitude of 50 mV and a frequency of 2 kHz for 25 ms. The rest of the excitation sources (15) remain at 0 V. During this time, the signal is acquired with the analogue inputs connected to each of the transducer (5) columns. Next, we would proceed in identical manner with the following row and so on until all the transducer rows have been read.

Below we describe an example of the use of an electrical and reusable device (1) for reading microarrays (6) based on impedimetric transducers (5), for measuring the results in a microarray (6) that uses urease as an enzymatic mark.

Urease, in the presence of urea (neutral), produces ammonia and carbon dioxide. The ammonia is quickly protonised, giving rise to ammonium ion (positively charged), while the carbon dioxide is practically converted into bicarbonate (negatively charged). Therefore, the enzymatic reaction increases the conductivity of the original buffer. The original buffer is formed by an aqueous solution of 0.1 M urea and 0.25 M glycine, with an approximate conductivity of 16 µS/cm. In this example, the buffer drops, with a volume of 1 µl, were manually deposited above the transducers (5) using a micropipette. In the preparation of the microarray, rabbit immunoglobulin G was used as the standard analyte to be detected and a reverse phase-type test was applied. It consisted of preparing successive dilutions of a stock solution of said standard analyte. Micro-drops with a volume of 1 µl of each of the dilutions prepared were deposited on the support (9) of the microarray (6) (previously silanised glass slide). Upon immobilising the analyte, the microarray (6) was incubated with a solution of goat antibody and urease-marked rabbit anti-immunoglobulin G for an hour, during which time a specific interaction took place between the analyte and marked antibody. After cleaning the microarray (6) with deionised water and drying in a nitrogen current, it was read using the matrix of impedimetric transducers (5).

## Claims

1. An electrical and reusable device (1, 1', 1") for reading microarrays (6) where the microarray (6) comprises a flat support (9), on the test surface (7) of which there is a matrix of spots (8) with an enzymatic mark, **characterised in that** it comprises:
a base (2, 2', 2") that comprises support means (3, 3', 3") for positioning the microarray (6) test surface (7) parallel to a reading surface (4) of the base (2 2', 2");
a matrix of transducers (5, 5', 5"), disposed on the reading surface (4) of the base (2, 2', 2"), which transform a variation of an electrical or chemical magnitude into a variation of an electrical magnitude; and
reading means (10) connected to the transducers (5, 5', 5"), which interpret the electrical signals of the transducers (5, 5', 5").

2. A device (1, 1', 1") for electrically reading microarrays (6), according to claim 1, **characterised in that** the base (2, 2', 2") and the matrix of the transducers (5, 5', 5") are manufactured from a pyrex-type glass wafer.

3. A device (1, 1', 1") for electrically reading microarrays (6), according to any one of claims 1 to 2, **characterised in that** the transducers (5, 5', 5") are chosen from the following list: impedimetric transducers, amperometric transducers and potentiometric transducers.

4. A device (1, 1', 1") for electrically reading microarrays (6), according to any one of claims 1 to 3, **characterised in that** the reading means (10) comprise electronic circuits adapted to acquire and process the electrical signals generated by the transducers (5, 5', 5").

5. A device (1, 1', 1") for electrically reading microarrays (6), according to any of claims 1 to 4, **characterised in that** it further comprises means for applying drops of aqueous medium to form a drop of aqueous medium above each transducer (5, 5', 5").

6. A device (1 ") for electrically reading microarrays (6), according to claim 5, **characterised in that** the means for applying drops of aqueous medium is an applicator comprising a tank of aqueous medium (11 ") and a matrix of micro-channels (12") made in one of its walls.

7. A device (1 ") for electrically reading microarrays (6), according to claim 5, **characterised in that** the means for applying drops of aqueous medium comprises a tank of aqueous medium (11') disposed next to the surface of the base (2') opposite the reading surface (4) and a matrix of micro-channels (12') made in said base (2').

8. A device (1') for electrically reading microarrays (6), according to claim 7, **characterised in that** the micro-channels (12') comprise a nozzle arranged in a central orifice of the transducers (5').

9. Process for reading a microarray (6), where the microarray (6) comprises a flat support (9), on the test surface (7) of which there is a matrix of spots (8) with an enzymatic mark, and where the reading device (1, 1', 1") comprises a base (2, 2', 2"), on the reading surface (4) of which a matrix of transducers (5, 5', 5") is disposed which transform a modification of an electrical or chemical property into a modification of an electrical property, **characterised in that** it comprises the following operations:
position the reading surface (4) of the base (2, 2', 2") parallel to the test surface (8) of the microarray (6), in such a manner that each spot (8) is disposed in opposition to a transducer (5, 5', 5") with a drop of an aqueous medium in contact with both;
read, using reading means (10), the electrical signal generated by each of the transducers (5, 5', 5") in response to the modification of an electrical or chemical property of the aqueous medium that forms the drop; and
clean the reading surface (4) of the device (1) to reuse it for new readings.

10. Process for reading a microarray (6), according to claim 9, **characterised in that** the drop of aqueous medium is added before bringing the spots (8) of the microarray (6) into contact with the transducers (5, 5', 5").

11. Process for reading a microarray (6), according to claim 9, **characterised in that** the drop of aqueous medium is added after bringing the spots (8) of the microarray (6) into contact with the transducers (5, 5', 5").

12. Process for reading a microarray (6), according to any one of claims 9 to 11, **characterised in that** the reading operation is performed during the time that each drop of aqueous medium remains in contact with the spots (8) and transducers (5, 5', 5").

13. Process for reading a microarray (6), according to any one of claims 9 to 11, **characterised in that** the reading operation is only performed once, a predetermined period of time after the drops of aqueous medium have come into contact with the spots.

14. Process for reading a microarray (6), according to any one of claims 9 to 13, **characterised in that** the cleaning operation of the reading device (1, 1', 1") is performed injecting a cleaning solution by applying drops of aqueous medium.
